# EUROPEAN PATENT APPLICATION

(11) **EP 4 815 473 A1**
(43) Date of publication of application: **30.09.2026**
(21) Application number: 25305429.0
(22) Date of filing: 25.03.2025
(51) Int. Cl.: H04N 21/81

(54) **ACCESS TO PARTIAL AVATAR REPRESENTATION**

(71) Applicant: InterDigital CE Patent Holdings, SAS, 75017 Paris (FR)
(72) Inventor: COVA REGATEIRO, João Pedro, 35220 CHATEAUBOURG (FR); HAMZA, Ahmed, COQUITLAM, V3J 3X5 (CA); GOSSELIN, Philippe Henri, 35340 LIFFRE (FR); AVRIL, Quentin, 35830 BETTON (FR); LE CLERC, Francois, 35590 L'HERMITAGE (FR)
(74) Representative: Vossius & Partner Patentanwälte Rechtsanwälte mbB

(57) **Abstract**

Systems, methods, and instrumentalities are disclosed for enabling partial access to an avatar representation format (ARF) file. A client device may determine a manifest (e.g., a manifest file) associated with an avatar, wherein the avatar may include a first subset of components and a second subset of components, and wherein the manifest may indicate a request for data associated with the first subset of components. The client device may transmit the manifest to a server device and receive an ARF (e.g., a partial or reduced ARF) file from the server device. The ARF file may include the data associated with the first subset of components of the avatar, and the client device may generate a partial rendition of the avatar based on the ARF file, wherein the partial rendition may include the first subset of components of the avatar.

## Description

### BACKGROUND

Digital assets such as avatars may be rendered, animated, and/or streamed over a communication network. An avatar representation format (ARF) file may be used to support the rendering, animation, and/or streaming of an avatar.

### BRIEF SUMMARY

Systems, methods, and instrumentalities are disclosed for enabling partial access to an avatar representation format (ARF) file. A client device such as a decoding device as described herein may determine a manifest (e.g., a manifest file) associated with an avatar, wherein the avatar may include a first subset of components and a second subset of components, and wherein the manifest may indicate a request for data associated with the first subset of components. The client device may transmit the manifest to a server device and receive an ARF (e.g., a partial or reduced ARF) file from the server device. The ARF file may include the data associated with the first subset of components of the avatar, and the client device may generate a partial rendition of the avatar based on the ARF file, wherein the partial rendition may include the first subset of components of the avatar.

In examples, the ARF file may not include data for rendering the second subset of components of the avatar, and the partial rendition of the avatar may not include the second subset of components of the avatar.

In examples, the manifest may indicate at least one of an identifier associated with the avatar or an asset associated with the first subset of components of the avatar. In examples, the manifest may further indicate a type of data associated with the first subset of components to be included in the ARF file.

In examples, the client device may request and receive one or more manifest files from the server device and may determine the manifest by selecting information from the one or more manifest files (e.g., by selecting one of the received manifest files as the manifest). In examples, the client device may request and receive ARF information about the avatar from the server device, and may create the manifest based on the received ARF information. Such ARF information may indicate a list of structures or components of the avatar but may not include raw data for those structures or components.

A server device as described herein may receive a manifest associated with an avatar from a client device, wherein the avatar may include a first subset of components and a second subset of components, and wherein the manifest may indicate a request of the client device for data associated with the first subset of components. The server device may generate a partial ARF file based on the received manifest, wherein the partial ARF file may include the data associated with the first subset of components of the avatar but not data associated with the second subset of components of the avatar. The server device may transmit the partial ARF file to the client device for a partial rendition of the avatar.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example of an avatar processing pipeline according to one or more embodiments of the present disclosure.
FIG. 2 shows examples of server-client interactions using an ARF manifest file according to one or more embodiments of the present disclosure.
FIG. 3 shows examples of serve-client interactions using a manifest file generated by a client according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

A device may be provided with the ability to access (e.g., partially access) the contents of an Avatar Representation Format (ARF) document (e.g., an MPEG ARF document). The access and definition of the ARF document may permit the coding device (e.g., a decoder) to identify each component of an avatar that may be used in a given application. The access and definition may permit the creation of relations and assigned pointers to different components of the ARF document. For example, a cellphone client may request a reduced ARF document comprising a certain Level of Detail (LOD) that may be better suited for cellphone avatar communication applications. As another example, an immersive teleconference client may request a reduced ARF document (e.g., comprising only an Avatar torso, arms and head) if only those parts are to be viewed in the conference session.

Support may be provided to represent and animate avatars as well as streaming the animation parameters for an avatar over a communication network (e.g., a wireless communication network such as a WiFi or cellular network).

An ARF format may include rich properties that support realistic renderings, simplistic animations and easy parametrizations, which allow users to personalize and animate their characters freely. The ARF format may be the first interoperable format capable of representing and efficiently transmitting avatar related properties.

A manifest file may be defined, generated and/or transmitted to describe parts of an ARF document or file. For example, network conditions or device capabilities may dictate that only certain LODs are supported and therefore, instead of loading into memory the entirety of an ARF container (which may be large in size), techniques may be provided to partially access the content of the ARF container, for example, by referencing the relevant parts of the ARF document.

The manifest file for ARF may be referred to interchangeably as an auxiliary file for ARF. Other nomenclature may also be used without changing the scope of this disclosure. The manifest file may permits a user (e.g., including devices or applications associated with a human user) to select parts of an avatar represented by an ARF that may correspond to the needs and/or capabilities of the user (e.g., the devices or applications associated with the user). In this way, the transmission of data between a server (e.g., an avatar rendering server) and a client (e.g., the user) may be reduced and/or personalized for applications that make use of avatar technology. By transmitting this manifest file (e.g., to the server), the sender (e.g., the client) may request to download (e.g., from the server) parts of the ARF container that comply with the sender's request (e.g., requirements).

Using the techniques described herein, access to parts of the ARF container may be possible, for example, without having to decode the entirety of the container.

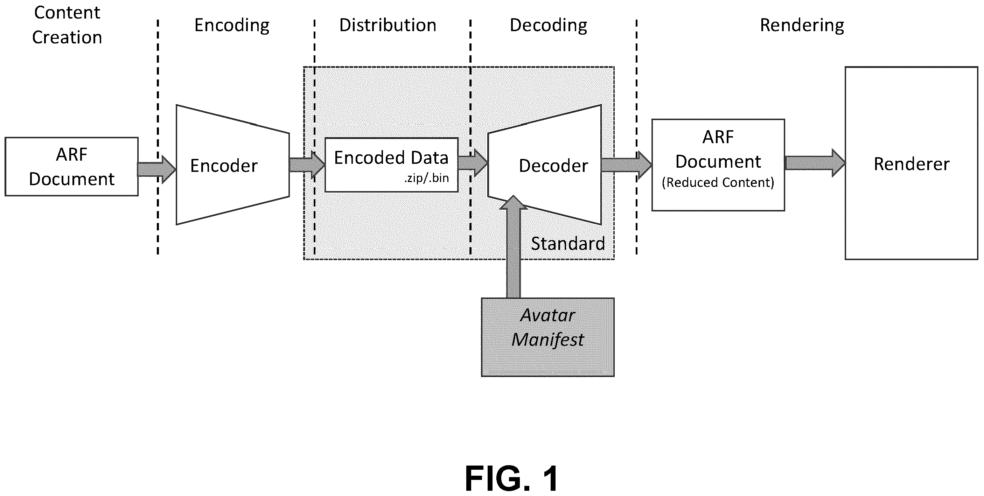

FIG. 1 illustrates an example of an avatar processing pipeline using ARF encoding and a manifest file to condition a decoder (e.g., a client device) to output a subset of an original encoded ARF document (e.g., a reduced-content ARF document generated by such a pipeline may become the output of a codec). As shown in the figure, a manifest file (e.g., of a certain format) may be provided as an input to the decoder, which may the manifest file to extract a subset of encoded ARF data to generate a reduced-content ARF container file (e.g., a new ARF container file).

In a metaverse context, if an avatar streaming platform supports multiple avatar formats and/or animation formats, the manifest file described herein may be used by clients and/or servers to access different components of an avatar and/or to request or deliver such components, for example, based on the capabilities and/or requirements of a communication network or a user (e.g., including the capabilities or requirements of devices and/or applications associated with the user). The manifest file may be used upon receiving a request to indicate to a client or server what data may be used for an avatar representation. The server may use the information in the manifest file to deliver the corresponding avatar data from an ARF container.

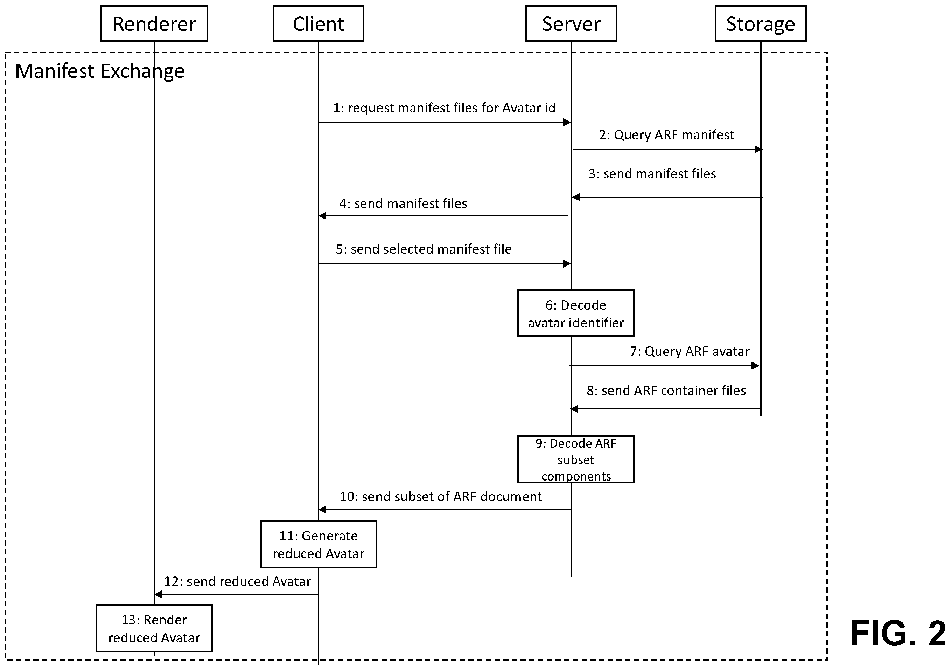

FIG. 2 illustrates examples of server-client interactions using the proposed manifest file format, where the client may select a manifest file from a set of candidate manifest files that may be received from the server. One or more of the following operations may be performed.

At 1 of FIG. 2, the client may initiate a session by requesting one or more available manifest files for an avatar (e.g., which may be identified by an avatar identifier (ID)).

At 2 of FIG. 2, the server may parse the request from the client. For example, the server may redirect the client request to a storage device (e.g., the storage device may be local to the server or accessible via a network as a service provider platform), assuming that the client and/or the avatar manifest request have passed an authentication procedure (e.g., based on the avatar ID and/or a client identifier).

At 3 of FIG. 2, the storage device may provide the server with a list of manifest files associated with the avatar ID.

At 4 of FIG. 2, the server may send a message (e.g., by redirecting a message from the storage device) to the client and the message may include the list of available manifest files. In some examples, the server and/or the storage device may provide all available manifest files to the client, while in other examples, the server and/or storage device may provide a subset of the available manifest files to the client (e.g., as a consequence of session establishment that may take devices capabilities into consideration). For example, a client that uses a cell phone may only have access to limited animation streams or may not be able to perform body tracking. As such, the manifest files that include body tracking may not be included in the list sent to the client.

At 5 of FIG. 2, the client may select a manifest from the list (e.g., given by the server or the storage device from a repository of manifest files) and return information about the selected manifest to the server (e.g., the client may return the selected manifest file to the server or indicate an identifier of the selected manifest file to the server). The client may also generate a new manifest file based on the list of manifest files received by the client (e.g., by selecting certain components or properties desired by the client from the list of manifest files provided by the server), and send information about the new manifest file to the server (e.g., the client may send the new manifest file to the server).

At 6 of FIG. 2, the server may decode the information provided by the client and retrieve the relevant manifest parameters and/or identifiers.

At 7 of FIG. 2, the server may send a query to the storage device to obtain one or more ARF files that may correspond to the decoded manifest parameters and/or identifiers.

At 8 of FIG. 2, the Storage Device may return one or more ARF files describing an avatar representation in storage.

At 9 of FIG. 2, the server may decode the one or more ARF files provided by the Storage Device to generate an ARF container (e.g., a reduced ARF container) that may include the data requested by the client (e.g., as indicated by the manifest file).

At 10 of FIG. 2, the server may send the ARF container file (e.g., comprising a subset of ARF properties or information) to the client.

At 11 of FIG. 2, the client may generate an avatar (e.g., a reduced avatar comprising a subset of components of a full avatar).

At 12 of FIG. 2, the client may send the generated avatar to an application (e.g., an application on the client) for rendering and/or display.

At 13 of FIG. 2, the application may render and display the avatar (e.g., the reduced avatar), which may, for example, include only the head of the avatar for purposes of using facial animations.

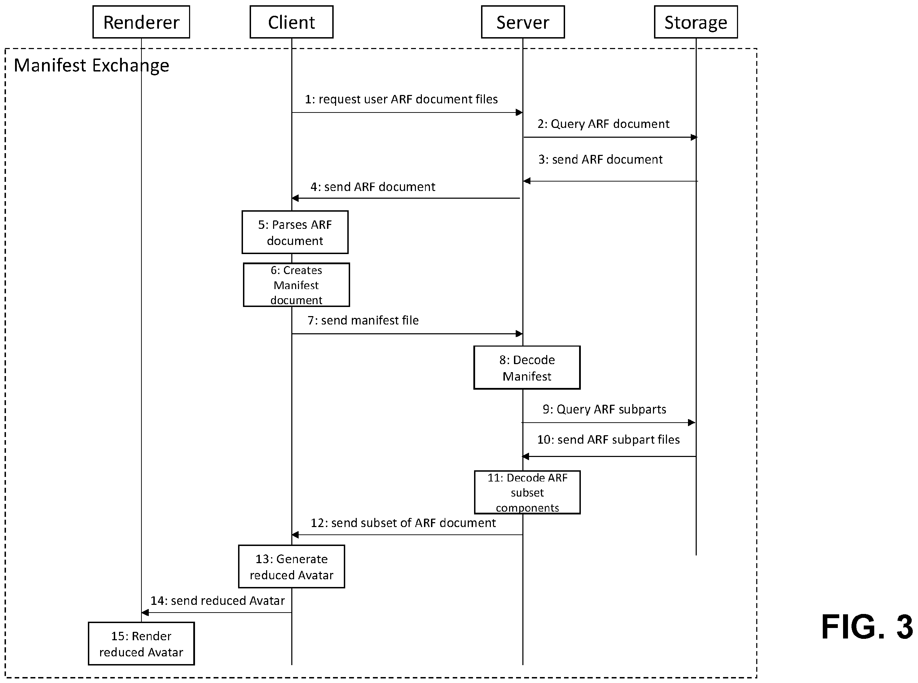

FIG. 3 illustrates examples of serve-client interactions using a manifest file generated by a client based on an ARF file or document (e.g., the ARF document may be retrieved from a server or a different source). One or more of the following operations may be performed.

At 1 of FIG. 3, the client may initiate a session with the server, for example, by a request to the server for available ARF files associated with an avatar (e.g., identified by an avatar ID).

At 2 of FIG. 3, the server may parse the request from the client. For example, the server may redirect the client request to a storage device (e.g., a storage device local to the server or accessible via a network as a service provider platform), assuming that the client and/or the avatar manifest request have passed an authentication procedure (e.g., based on the avatar ID and/or a client identifier).

At 3 of FIG. 3, the storage device may provide to the server with an ARF document associated with the avatar ID.

At 4 of FIG. 3, the server may send a message (e.g., by redirecting a message from the storage device) to the client with the available ARF document.

At 5 of FIG. 3, the client may parse the ARF document, which may not contain raw data but instead only information about the structure and components of a corresponding raw ARF file). For example, the corresponding raw ARF file containing raw data that is heavier to transmit may remain at the storage device, while the ARF document sent to the client may be a lightweight file (e.g., such as a JavaScript Object Notation (JSON) based file that indicates the structure and/or core components of the raw ARF file).

At 6 of FIG. 3, the client may use the parsed ARF document to create a manifest file that may represent a reduced version of the ARF document and, as a consequence, a reduced version of an ARF container that may be used by the client for avatar rendition.

At 7 of FIG. 3, the client may send the created manifest file to the server.

At 8 of FIG. 3, the server may decode the manifest and determine subparts of a corresponding ARF containing (e.g., containing raw ARF data) to request from the storage device.

At 9 of FIG. 3, the server may request the subparts of the ARF container from the storage device.

At 10 of FIG. 3, the storage device may return the requested subparts of the ARF container to the server.

At 11 of FIG. 3, the server may decode the subparts of the ARF container and/or relevant documents into a format readable by the client (e.g., in a JSON or text based format).

At 12 of FIG. 3, the server may send the ARF information (e.g., reduced ARF information) to the client.

At 13 of FIG. 3, the client may generate an avatar (e.g., a reduced avatar) based on the ARF information provided by the server.

At 14 of FIG. 3, the client may send the generated avatar to an application (e.g., an application on the client) for rendering and/or display.

At 15 of FIG. 3, the application may render and/or display the avatar.

It should be noted that the rendering may occur on the client side by an application running locally, on the server side with a continuous transmission of video or image frames, or via a mixture of client and server operations (e.g., split rendering).

Table 1 below illustrates an example of an avatar manifest file format that may include information about an avatar. The manifest file format may be represented in a human readable format such as a JSON or text-based format. The manifest file format may be represented in a binary format, and a suitable encoding and decoding mechanism may be used to interpret the contents of the manifest file.

**Table 1 - Example avatar manifest file contents**

| **Name** | **Type** | **Default** | **Description** | **Required** |
|---|---|---|---|---|
| version | string | N/A | File version | Yes |
| name | string | N/A | Name of the avatar. | Yes |
| description | string | N/A | Description of the avatar. | Yes |
| id | integer | N/A | Identifier of the Avatar. This identifier may be used to retrieve the original ARF that contains the same identifier. | Yes |
| representation | AvatarRepresentation | N/A | A lower-level representation of an avatar. The representation references an ARF document with a specific set of features. | Yes |

In Table 1, the "version" may indicate which version of ARF encoding the manifest is using. The "name" may provide the name of an avatar in an ARF document. The "description" may give semantical description of the manifest file in relation of its reference to the ARF (e.g., "avatar with only head representation and facial expression animation streams"). The "id" may indicate the identifier of the ARF document. This identifier may be used to find and retrieve the ARF file to which the manifest may apply. The identifier of an ARF file may be unique among different formats and, as such, the id of a manifest file may match that of an ARF (e.g., a single ARF file). The "representation" may include information related to different components of the ARF file that may permit selecting those components by different levels of information. The representation may indicate an asset and may include content information about that asset.

Table 2 below illustrates example semantics for an avatar representation (e.g., the "representation" shown in Table 1). The representation may define an asset and the content of that asset. The content of the asset may be represented by a "ContentDescription," which may be used to construct a reduced ARF file by pointing to selected components of the original ARF file.

**Table 2 - Example semantics of an avatar representation**

| **Name** | **Type** | **Default** | **Description** | **Required** |
|---|---|---|---|---|
| asset | integer | N/A | Identifier of an avatar asset in an ARF document | Yes |
| content | ContentDescriptor | N/A | Description of avatar data contained in an ARF representation that may be included in a "reduced content" ARF document or file. | Yes |

In Table 2, the "asset" may refer to an item in a list of assets of an ARF container and the "content" may include a description of a component (e.g., types of data for the component) contained in a reduced ARF file.

Table 3 illustrates example semantics of a content descriptor (e.g., the "content" shown in Table 2). The content descriptor may define low level (e.g., the lowest level) of data representation, including the geometry, animation or skeletal structure of an avatar component.

**Table 3 - Example semantics of a ContentDescriptor**

| **Name** | **Type** | **Default** | **Description** | **Required** |
|---|---|---|---|---|
| lod | integer | N/A | lod of an avatar representation. | Yes |
| skin | integer | N/A | skin of the avatar representation. | Yes |
| mesh | integer | N/A | mesh of the avatar representation. | Yes |
| skeleton | integer | N/A | skeleton of the avatar representation. | Yes |
| blendshapeSet | integer | N/A | BlendshapeSet of the avatar representation. | Yes |
| landmarkSet | integer | N/A | landmarkSet of the avatar representation. | Yes |

In Table 3, the "lod" may refer to an item in a list of lods of an ARF container. The "skin" may refer to an item in a list of skins of the ARF container. The "mesh" may refer to an item in a list of meshes of the ARF container. The "skeleton" may refer to an item in a list of skeletons of the ARF container. The "blendshapeSet" may refer to an item in a list of blendshapeSets of the ARF container. The "landmarkSet" may refer to an item in a list of landmarkSets of the ARF container.

Using one or more of the semantics described herein, a manifest file may specify individual content items and resources from a source ARF file that may be included in a reduced-content ARF file may be delivered to a client.

In examples, one or more (e.g., all) of the data elements shown in Table 3 may have a data type of an integer array, which may permit having one or more references of each data element.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding data according to the methods described above.

One or more embodiments provide a computer-readable storage medium having stored thereon data generated according to the methods described above. One or more embodiments also provide a method and apparatus for transmitting or receiving data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

The various embodiments described herein provide at least the following features, devices or aspects, alone or on any combination, across various claim categories and types:
i. Encoding, into coded data, syntax elements that can enable the decoder to decode the coded data, according to any of the embodiments described herein.
ii. Data that may include one or more of the described syntax elements, or variations thereof, whether transmitted, stored, or otherwise made available.
iii. Creating, transmitting, receiving, and/or decoding of the data.
iv. An electronic device (e.g., TV, set-top box, mobile phone, tablet, etc.) that receives a bitstream or that receives such bitstream over the air. The electronic device decodes the syntax elements from the bitstream, and, optionally, displays (e.g., via a monitor or other type of display) a resulting image or avatar.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input data an order to produce an encoded bitstream. Additionally, the terms "reconstructed" and "decoded" may be used interchangeably, the terms "encoded" or "coded" may be used interchangeably.

The present disclosure refers to information, for example, syntax elements, that can be transmitted or stored. Such information can be packaged or arranged in a variety of manners. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A client device, comprising
a processor configured to:
determine a manifest associated with an avatar, wherein the avatar includes a first subset of components and a second subset of components, and wherein the manifest indicates a request for data associated with the first subset of components;
transmit the manifest to a server device;
receive an avatar representation format (ARF) file from the server device, wherein the ARF file includes the data associated with the first subset of components of the avatar; and
generate a partial rendition of the avatar based on the ARF file, wherein the partial rendition includes the first subset of components of the avatar.

2. The client device of claim 1, wherein the ARF file does not include data for rendering the second subset of components of the avatar, and wherein the partial rendition of the avatar does not include the second subset of components of the avatar.

3. The client device of claim 1 or 2, wherein the manifest indicates at least one of an identifier associated with the avatar or an asset associated with the first subset of components of the avatar.

4. The client device of claim 3, wherein the manifest further indicates a type of data associated with the first subset of components to be included in the ARF file.

5. The client device of any of claims 1-4, wherein the processor is configured to receive one or more manifest files from the server device and determine the manifest by selecting information from the one or more manifest files.

6. The client device of claim 5, wherein the processor is further configured to send a request for the one or more manifest files to the server device.

7. The client device of any of claims 1-4, wherein the processor is configured to receive ARF information about the avatar from the server device and create the manifest based on the received ARF information.

8. The client device of claim 7, wherein the ARF information received from the server device indicates a list of structures or components of the avatar, and wherein the processor is further configured to send a request for the ARF information to the server device.

9. A method implemented by a client device, comprising:
determining a manifest associated with an avatar, wherein the avatar includes a first subset of components and a second subset of components, and wherein the manifest indicates a request for data associated with the first subset of components;
transmitting the manifest to a server device;
receiving an avatar representation format (ARF) file from the server device, wherein the ARF file includes the data associated with the first subset of components of the avatar; and
generating a partial rendition of the avatar based on the ARF file, wherein the partial rendition includes the first subset of components of the avatar.

10. The method of claim 9, wherein the ARF file does not include data for rendering the second subset of components of the avatar, and wherein the partial rendition of the avatar does not include the second subset of components of the avatar.

11. The method of claim 9 or 10, wherein the manifest indicates at least one of an identifier associated with the avatar, an asset associated with the first subset of components of the avatar, or a type of data associated with the first subset of components to be included in the ARF file.

12. The method of any of claims 9-11, further comprising receiving one or more manifest files from the server device, wherein the manifest is determined by selecting information from the one or more manifest files.

13. The method of any of claims 9-11, further comprising receive ARF information about the avatar from the server device, wherein the ARF information indicates a list of structures or components of the avatar and wherein the manifest is created based on the received ARF information.

14. A server device, comprising
a processor configured to:
receive a manifest associated with an avatar from a client device, wherein the avatar includes a first subset of components and a second subset of components, and wherein the manifest indicates a request of the client device for data associated with the first subset of components;
generate a partial avatar representation format (ARF) file based on the received manifest, wherein the partial ARF file includes the data associated with the first subset of components of the avatar; and
transmit the partial ARF file to the client device.

15. The server device of claim 14, wherein the partial ARF file does not include data for rendering the second subset of components of the avatar.
